**Europäisches Patentamt**

**European Patent Office**

**Office européen des brevets**

(19)

(11) **EP 0 995 075 B1**

(12) **EUROPÄISCHE PATENTSCHRIFT**

(45) Veröffentlichungstag und Bekanntmachung des Hinweises auf die Patenterteilung:
**17.08.2005 Patentblatt 2005/33**

(51) Int Cl.⁷: $G01B\ 7/06$, $G01B\ 121/02$, $G01B\ 101/00$

(21) Anmeldenummer: **99923391.9**

(22) Anmeldetag: **24.03.1999**

(86) Internationale Anmeldenummer:
**PCT/DE1999/000869**

(87) Internationale Veröffentlichungsnummer:
**WO 1999/058923 (18.11.1999 Gazette 1999/46)**

(54) **VERFAHREN ZUR BESTIMMUNG DER DICKE EINER SCHICHT AUS ELEKTRISCH LEITENDEM MATERIAL**

METHOD FOR DETERMINING THE THICKNESS OF A LAYER MADE OF ELECTRICALLY CONDUCTIVE MATERIAL

PROCEDE POUR DETERMINER L'EPAISSEUR D'UNE COUCHE DE MATERIAU ELECTROCONDUCTEUR

(84) Benannte Vertragsstaaten:
**DE ES FR GB IT SE**

(30) Priorität: **08.05.1998 DE 19820546**

(43) Veröffentlichungstag der Anmeldung:
**26.04.2000 Patentblatt 2000/17**

(73) Patentinhaber: **ROBERT BOSCH GMBH**
**70442 Stuttgart (DE)**

(72) Erfinder:
• **DOBLER, Klaus**
**D-70839 Gerlingen (DE)**
• **HACHTEL, Hansjoerg**
**D-71287 Weissach (DE)**
• **DIMKE, Reinhard**
**D-70195 Stuttgart (DE)**
• **AUF DER HEIDE, Franz**
**D-96123 Litzendorf (DE)**
• **BLATTERT, Richard**
**D-71711 Murr (DE)**
• **WEBER, Josef**
**D-71739 Oberriexingen (DE)**

(56) Entgegenhaltungen:
**DE-A- 19 652 750      GB-A- 2 257 520**
**US-A- 3 922 599       US-A- 4 829 251**
**US-A- 5 525 903**

## Beschreibung

Stand der Technik

Die Erfindung geht aus von einem Verfahren zur Bestimmung einer Dicke einer Schicht aus elektrisch leitendem Material, insbesondere einer Chromschicht, wie es zum Beispiel in der nachveröffentlichten DE-A-196 52 750.3 beschrieben ist. Bei diesem Meßverfahren ist vorausgesetzt, daß die Qualität des Grundstoffes, auf den die Schicht aufgebracht ist, über eine Produktion hin gesehen relativ konstant ist und nur in geringen Grenzen schwankt. In der Massenproduktion können aber diese geringen Schwankungsgrenzen nur schwer eingehalten werden. Dadurch kann es zu Meßungenauigkeiten bei der Bestimmung der Schichtdicke kommen.

Vorteile der Erfindung

Das erfindungsgemäße Verfahren zur Bestimmung einer Dicke einer Schicht aus elektrisch leitendem Material mit den Merkmalen des unabhängigen Anspruchs hat demgegenüber den Vorteil, daß eine Schichtdickenbestimmung bei relativ großen Qualitätsschwankungen des Grundstoffes möglich ist. Der daduch auftretende Meßfehler kann durch eine Vormessung weitgehend eliminiert werden. Insbesondere in der Massenproduktion weisen die von verschiedenen Zulieferern hergestellten Grundkörper unterschiedliche Qualitäten der Werkstoffeigenschaften und damit verbunden unterschiedliche elektrische und magnetische Eigenschaften auf. Diese Schwankungen der stofflichen Beschaffenheit des Grundstoffs können in relativ einfacher Weise eliminiert werden.

Durch die im abhängigen Patentanspruch 2 aufgeführten Maßnahmen sind vorteilhafte Weiterbildungen und Verbesserungen des im unabhängigen Anspruch angegebenen Verfahrens möglich.

Zeichnung

Ein Ausführungsbeispiel der Erfindung ist in der Zeichnung dargestellt und in der nachfolgenden Beschreibung näher erläutert.

Die Figur 1 zeigt einen schematischen Aufbau der Meßvorrichtung.

In der Figur 2 ist der Verlauf der Induktivität L der Meßspule über die Dicke a der zu bestimmenden Schicht bei unterschiedlichen Abständen und bei unterschiedlicher stofflicher Beschaffenheit α bzw. β des sich unter der zu bestimmenden Schicht befindlichen Materials dargestellt.

In der Figur 3 ist das Verhältnis der in Figur 2 verwendeten unterschiedlichen Abstände zwischen der Meßspule und dem Meßobjekt dargestellt.

Figur 4 zeigt den Verlauf der Normwerte Me über der Schichtdicke a.

Figur 5 zeigt ein Blockschaltbild des Verfahrens.

Figur 6 zeigt den Verlauf der Normwerte Me über der Schichtdicke a.

Figur 7 zeigt ein weiteres Blockschaltbild einer Abwandlung des Verfahrens.

Figur 8 zeigt eine Abwandlung des beim Meßverfahren verwendeten Eichkörpers. Figur 9 zeigt eine Abwandlung des beim Meßverfahren verwendeten Meßkörpers.

In der Figur 10 ist der Verlauf der Normwerte Me über der Schichtdicke a bei unterschiedlicher Qualität des Grundstoffes dargestellt.

Die Figur 11 zeigt ferner den Verlauf des Korrekturfaktors F über den Kennwert K, der die Qualität des Basismaterials des Grundstoffes beschreibt.

Beschreibung des Ausführungsbeispiels

Im folgenden wird zuerst das in der DE-A 196 52 750.3 beschriebene Meßverfahren erläutert, das durch das erfindungsgemäße Korrekturverfahren verbessert wird. Das Meßverfahren selbst beruht auf dem sogenannten Induktiv-Wirbelstrommeßverfahren.

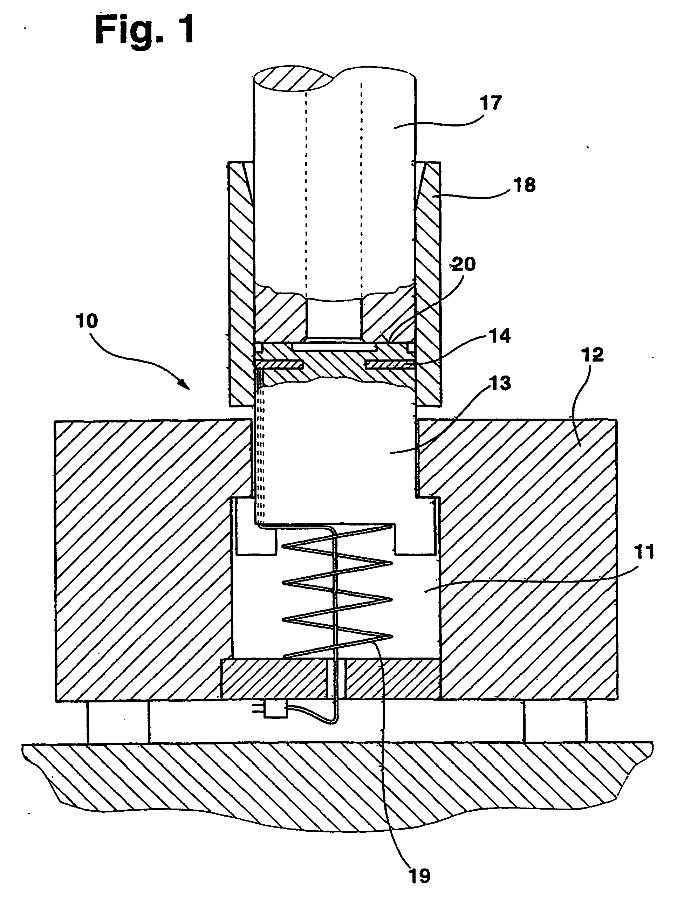

In der Figur 1 ist ein dafür verwendeter Sensor 10 konstruktiv dargestellt. Der Sensor 10 ist in der Ausnehmung 11 eines Grundkörpers 12 angeordnet und besteht aus einem Spulenkörper 13 auf dem eine von einem hochfrequenten Wechselstrom, zum Beispiel 4 MHz, durchflossene Spule 14 angebracht ist. Die Spule 14 kann zum Beispiel als Flachspule oder Ringspule ausgebildet sein. Der Spulenkörper 13 besteht vorzugsweise aus elektrisch nicht leitendem und nicht ferromagnetischem Material, zum Beispiel Kunststoff, und wird nahezu reibungsfrei in der Ausnehmung 11 geführt. Das zu überwachende Bauteil 17 ist in einen Führungskörper 18 eingebracht, der das Bauteil 17 und die Spule 14 zueinander positioniert. Mit Hilfe einer Feder 19 wird der Spulenkörper 13 und somit die Spule 14 gegen die Oberfläche 20 des Bauteils 17 gedrückt. Die Oberfläche 20 weist die zu bestimmende Schicht auf. Beim Bauteil 17 kann es sich zum Beispiel um den Stutzen eines Einspritzventils handeln, wobei die Schicht 20 dann eine Chromschicht darstellt. Fließt durch die Spule 14 ein Wechselstrom, so wird ein magnetisches Wechselfeld erzeugt, das sowohl die Chromschicht 20 als auch die darunterliegende Materialschicht aus ferromagnetischem Material des Bauteils 17 durchdringt. In der Chromschicht 20 wirkt dann nur der Wirbelstromeffekt, während im ferromagnetischen Material des Grundkörpers 17 der Induktiv- und Wirbelstromeffekt wirksam sind. Im folgenden werden nun die jeweiligen Meßeffekte einzeln erläutert, die auftreten würden, wenn das jeweilige andere Teil nicht vorhanden wäre. Wird die Spule 14 von einem Wechselstrom durchflossen und erfaßt das magnetische Wechselfeld der Spule nur ein elektrisch gut leitendes aber nicht ferromagnetisches Material, d.h. nur die Chromschicht 20 würde vom magnetischen Wechselfeld der Spule erfaßt, so wirkt nur der sogenannte Wirbelstromeffekt. Aufgrund der sich in dem elektrisch gut leitenden, aber nicht ferromagnetischen Material ausbildenden Wirbelströme ergibt sich eine Verminderung der Induktivität der Spule 14.

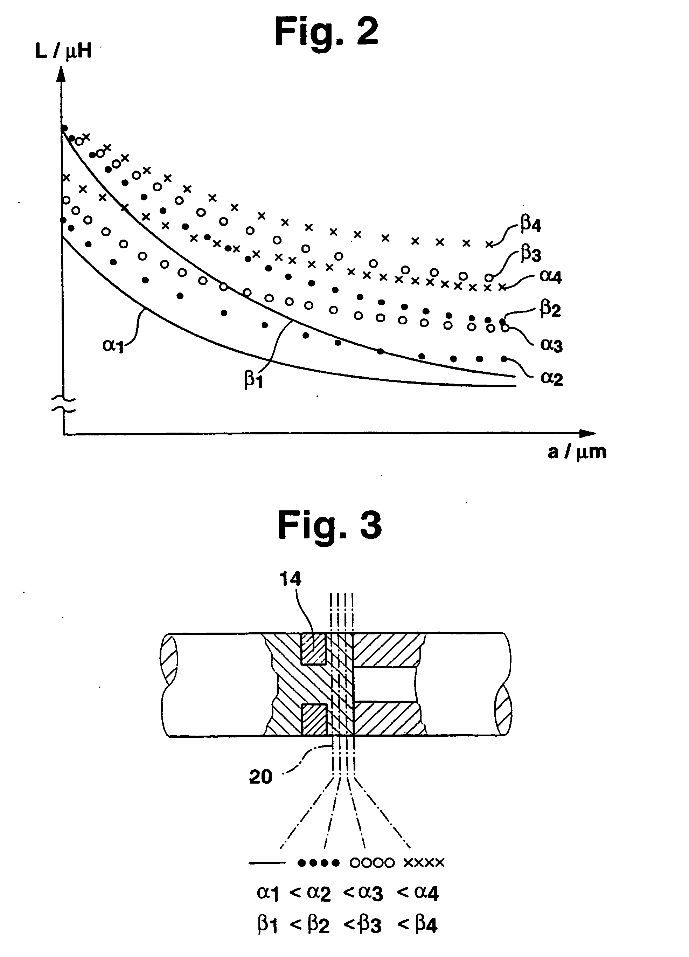

Im folgenden wird nun die Wirkung des magnetischen Feldes der von einem Wechselstrom durchflossenen Spule 14 auf das ihr gegenüberliegende ferromagnetische Material, d.h. auf das Material des Grundkörpers 17 beschrieben. Das magnetische Wechselfeld der von dem Wechselstrom durchflossenen Spule erfaßt das Material des Grundkörpers 17. Es sei darauf hingewiesen, daß bei elektrisch leitendem und ferromagnetischem Material sowohl der ferromagnetische Effekt als auch der Wirbelstromeffekt wirkt. Während der Wirbelstromeffekt eine Verminderung der Induktivität der Meßspule hervorruft, bewirkt der ferromagnetische Effekt eine Erhöhung der Induktivität der Meßspule. Welcher von beiden Effekten überwiegt, ist primär von der Frequenz des Wechselstroms, der die Spule 14 durchfließt, und von der Stoffbeschaffenheit des Grundkörpers 17 abhängig. Überträgt man diese beiden Meßeffekte auf den Grundkörper 17 mit der Chromschicht 20, so läßt sich feststellen, daß je dicker die Chromschicht 20 ist, desto schwächer bildet sich das Magnetfeld aus und damit ist die Induktivität der Spule 14 schwächer. In der Figur 2 ist mit $\alpha 1$ eine entsprechende Meßkurve dargestellt, die den abnehmenden Verlauf der Induktivität der Meßspule 14 über die zunehmende Dicke der Chromschicht 20 darstellt.

Der Verlauf der Meßkurve der Induktivität L über der Schichtdicke a hängt aber von der stofflichen Beschaffenheit des Grundkörpers 17, d.h. zum Beispiel von dem elektrischen Widerstand, der Permeabilität des Materials und vom Abstand zwischen der Spule 14 und der Oberfläche 20, die gemessen werden soll, ab. Verändert sich zum Beispiel bedingt durch Verschmutzungen oder durch Abnutzung des Spulenkörpers der Abstand zwischen der Meßspule 14 und der Chromschicht 20, so ergeben sich unterschiedliche Kennlinien des Verlaufs der Induktivität L über der Schichtdicke a. In der Figur 2 sind hier verschiedene Beispiele dargestellt. Die Kennlinien $\alpha 2$, $\alpha 3$ und $\alpha 4$ stellen hierbei den Verlauf der Induktivität L über der Schichtdicke a bei unterschiedlichem Abstand zwischen der Meßspule und der zu überwachenden Chromschicht aber bei gleicher stofflicher Beschaffenheit des Grundkörpers 17 dar. In der Figur 3 ist hierbei die Größe des Abstandes $\alpha$ zwischen der Spule 14 und der zu überwachenden Chromschicht 20 dargestellt. Es ist ersichtlich, daß der Abstand von $\alpha 1$ zu $\alpha 4$ immer größer wird. Würde man hingegen die stoffliche Beschaffenheit des Materials des Grundkörpers 17 verändern, so würden sich die Kennlinien $\beta 1$ bis $\beta 4$ ergeben. Die Kennlinien $\beta 1$ bis $\beta 4$ bedeuten wiederum eine Variation des Abstands zwischen der Meßspule und der zu überwachenden Chromschicht bei einer zweiten stofflichen Beschaffenheit des Grundkörpers. Aus dem Diagramm nach der Figur 2 ist erkenntlich, daß einem gemessenen Induktivitätswert L eine Vielzahl möglicher Schichtdicken zugeordnet werden kann. Statt der Induktivität kann auch der Wechselstromwiderstandswert der Spule ausgewertet werden.

Das erfindungsgemäße Meßverfahren ermöglicht nun auch eine eindeutige Zuordnung zwischen den gemessenen Induktivitätswerten L der Meßspule 14 und der Dicke a der Chromschicht 20, wenn sich die stoffliche Beschaffenheit des Grundkörpers 17 und/oder der Abstand zwischen der Meßspule 14 und der Oberfläche der zu bestimmenden Chromschicht ändert. Kern des erfindungsgemäßen Verfahrens ist es, eine Normung durchzuführen, die auftretende Meßfehler eliminiert und einen eindeutigen zuordbaren Meßwert ermittelt.

Das erfindungsgemäße Verfahren zur Bestimmung der Dicke einer Schicht wird in mehreren Meß- und Auswerteschritten durchgeführt. Vor der Beschichtung des Grundkörpers 17 wird in einer sogenannten Vormessung ein Induktivitätswert $L_0$ der Spule 14 ermittelt. Hierbei sitzt die Spule 14 möglichst direkt auf der noch unbeschichteten der Spule zugewandten Oberfläche (Meßfläche) des Grundkörpers 17 auf. Es erfolgt somit nur eine Messung gegenüber dem Material des Grundkörpers 17. Die Größe des Induktivitätswerts $L_0$ hängt von der Beschaffenheit des Grundkörpers ab, insbesondere von dessen magnetischen und elektrischen Eigenschaften. Diese Beschaffenheit des Grundkörpers 17 kann in einer Serienfertigung schwanken. Deshalb ist der Induktivitätswert $L_0$ zu Beginn der Messung für jeden einzelnen Grundkörper 17 zu ermitteln und auch zuordbar in einem Datenspeicher abzuspeichern.

Anschließend wird nun der Grundkörper 17 in einer entsprechenden Beschichtungsanlage mit einer Chromschicht 20 versehen. Danach erfolgt eine zweite Messung, d.h. eine sogenannte Nachmessung, die an derselben Stelle des Grundkörpers 17 wie die oben erwähnte Vormessung durchgeführt wird. Dabei ergibt sich ein Induktivitätswert $L_X$ der Meßspule 14. Die Größe des Induktivitätswerts $L_X$ wird u.a. von der Dicke der Chromschicht 20 und von der stofflichen Beschaffenheit des Grundkörpers 17 bestimmt. Es ist sicherzustellen, daß beide ermittelten Induktivitätswerte $L_0$ bzw. $L_X$ jeweils eindeutig demselben Grundkörper 17 zuzuordnen sind. Diese beiden Induktivitätswerte $L_0$ bzw. $L_X$ werden nun mit Hilfe eines Algorithmuses in Normwerte umgeformt, d.h. in dimensionslose Kennzahlen, die einer entsprechenden Schichtdicke zuordbar sind. Um diese Normwertbildung durchführen zu können, muß der Induktivitätswert $L\infty$ ermittelt werden. Diesen Induktivitätswert $L\infty$ erhält man, wenn an einem Eichkörper eine Messung ausschließlich gegenüber einer Chromschicht durchgeführt wird. Die Oberfläche des Eichkörpers muß dabei eine so dicke Chromschicht aufweisen, daß sie das gesamte Magnetfeld der Spule abschirmt, so daß im ferromagnetischen Grundstoff des Eichkörpers weder der induktive noch der Wirbelstromeffekt sich auswirken kann. Gegebenenfalls könnte beim Eichkörper an Stelle von Chrom auch ein anderer elektrisch leitender, jedoch nicht ferromagnetischer Stoff als Ersatz verwendet werden. Entsprechend der Gleichung 1 wird nun der Normwert Me ermittelt. Der Faktor 1000 kann beliebig zwischen Null und Unendlich variiert werden.

$$(1)\ Me = 1000 \cdot \frac{L_x - L_0}{L\infty - L_0}$$

Me = Meßwert/Normwert
$L_0$ = Induktivitätswert (unbesch. Grundkörper)
$L_x$ = Induktivitätswert (beschichtetes Teil)
$L_\infty$ = Induktivitätswert (Eichkörper aus Chrom)

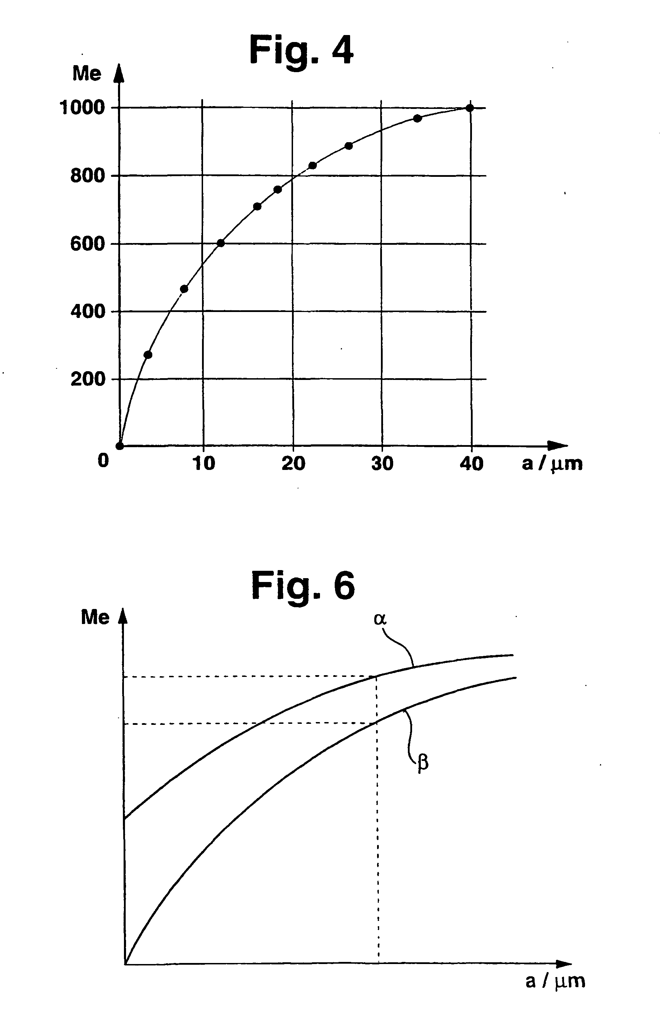

In der Figur 4 ist nun der Verlauf γ der entsprechend der Gleichung (1) normierten Meßwerte Me über der Schichtdicke a dargestellt. Die verschiedenen in der Figur 2 dargestellten Kurven ergeben einen nahezu zusammenfallenden Verlauf γ der jeweils ermittelten Normwerte Me. Es ist ersichtlich, daß in der Figur 4 gegenüber der Figur 2 eine eindeutige Zuordnung eines Normwerts Me zu einer Dicke der Schicht 20 möglich ist.

Mit Hilfe der Gleichung 1 wurden bisher die Fehler nahezu eliminiert, die durch unterschiedlich große Abstände zwischen der Meßspule und der zu bestimmenden Schicht und durch unterschiedliche magnetische bzw. elektrische Eigenschaften des Materials des Grundkörpers 17 entstehen. Es ist aber auch noch möglich, den Einfluß der unter anderem durch Temperaturschwankungen entstehenden sogenannten Offsetdrift auf das Meßergebnis zu unterdrücken. Hierzu ist auch der Induktivitätswert der Meßspule zu erfassen, der sich ergibt, wenn die Meßspule ausschließlich gegen Luft mißt, d.h. wenn ihr weder eine Chromschicht noch irgendein Bauteil gegenüberliegt. Dieser Meßwert wird im folgenden als Urluftwert Ll∞ bezeichnet. Er wird ermittelt kurz vor oder nachdem (möglichst zeitgleich) der Induktivitätswert L∞ mit Hilfe eines Eichkörpers ermittelt wird. Dieser Wert Ll∞ stellt einen Basiswert dar, der für die nachfolgenden Messungen jeweils verwendet wird. Während der individuellen Messung des einzelnen Grundkörpers 17 wird kurz vor oder nach der oben erwähnten sogenannten Vormessung, d.h. möglichst zeitgleich zur Ermittlung des Induktivitätswertes $L_0$ der Spule ein Induktivitätswert $Ll_0$ ermittelt, der entsteht, wenn die Meßspule wiederum gegen Luft mißt. Anschließend erfolgt zum Beispiel in einem Mikrocomputer eine Differenzbildung $\Delta L_0 = Ll_0 - Ll\infty$. Mit Hilfe dieses Wertes $\Delta L_0$ werden nun korrigierte Induktivitätswerte $L_0{}^* = L_0 - \Delta L_0$ errechnet. Sinngemäß ist auch bei der Messung des Induktivitätswertes $L_x$ der korrigierte Meßwert $L_x{}^*$ zu ermitteln. Hierbei wird zeitlich kurz vor oder nach der oben erwähnten sog. Nachmessung, d.h. kurz vor oder nach der Ermittlung des Wertes $L_x$ der Induktivitätswert der Spule gegenüber Luft erfaßt, der mit $Ll_x$ bezeichnet wird. Der Wert der Spule gegenüber Luft ist hier nochmals zu ermitteln, da ein zeitlicher Unterschied und somit eine Temperaturschwankung zwischen der Erfassung des Induktivitätswerts der Spule gegenüber Luft bei der sogenannten Vormessung und bei der sogenannten Nachmessung vorhanden sein kann. Der einmal ermittelte sogenannte Urluftwert Ll∞ kann sowohl bei der Korrektur des Induktivitätswerts $L_0$ bzw. des Induktivitätswertes $L_x$ über einen längeren Zeitraum verwendet werden. Auch ist es ausreichend, wenn der Induktivitätswert L∞, der den Induktivitätswert einer Messung ausschließlich gegenüber einer Chromschicht darstellt, nur intervallartig aufgenommen wird und für längere Zeit in einer Datenbank gespeichert wird. Wird aber der Induktivitätswert L∞ neu aufgenommen, um z.B. eine langsame und kontinuierliche Veränderung des Abstands zwischen der Meßspule und dem Meßobjekt (z. B. Abrieb) zu berücksichtigen, so ist gleichzeitig auch der sogenannte Urluftwert Ll∞ zu erneuern. Um nun bei der Normwertbildung auch die Offsetdrift des Meßergebnisses, die durch Temperaturschwankungen hervorgerufen wird, zu berücksichtigen, ist die Gleichung 2 zu verwenden.

$$(2)\ Me = 1000 \cdot \frac{(Lx-(Ll_x-Ll\infty))-(L_0-(Ll_0-Ll\infty))}{L\infty - (L_0-(Ll_0-Ll\infty))}$$

Bei Austausch eines Sensors müssen der Induktivitätswert L∞ und Ll∞ neu aufgenommen werden. Erfolgt der Austausch zwischen Vor- und Nachmessung muß auch bei der Nachmessung der alte Bezugswert Ll∞ verwendet werden.

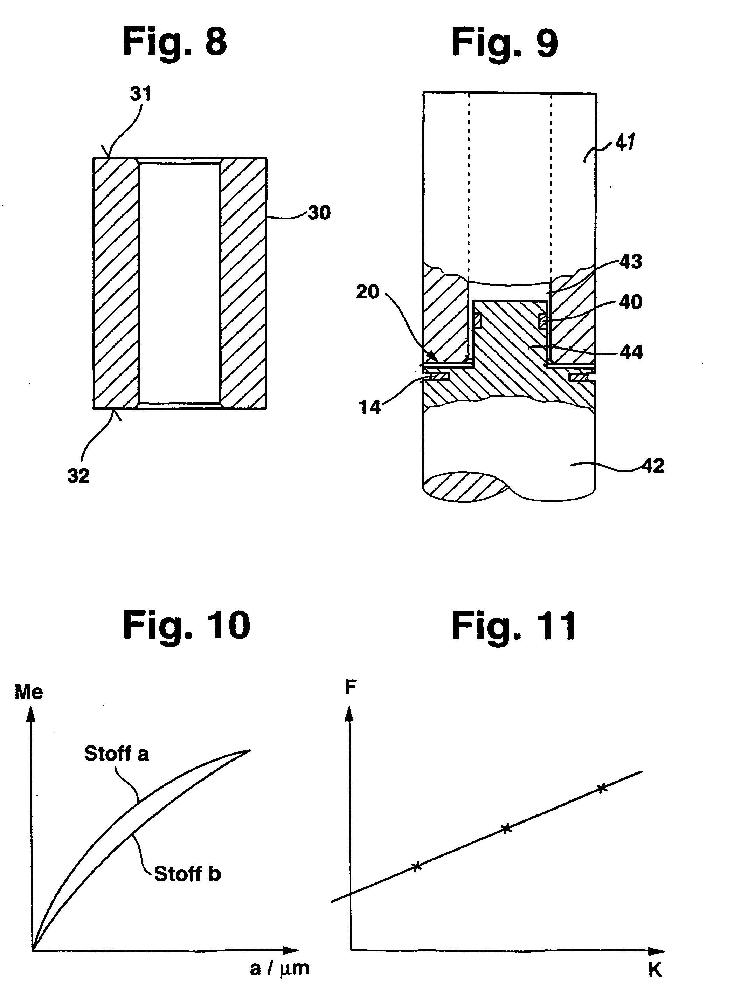

Bei manchen Materialien für den Grundkörper 17 ändern sich über längere Zeitabläufe betrachtet die elektrischen und magnetischen Werte des Materials des Grundkörpers. Diese Veränderung, d.h. Drift, kann bei jedem zu bestimmenden Meßkörper unterschiedlich groß sein, da diese Drift neben der Stoffbeschaffenheit auch von der individuellen Wärmebehandlung, die vor dem Verchromen erfolgt, abhängt. Für die Aufnahme von Justierkennlinien, siehe Fig. 4, werden deshalb Eichkörper, wie sie in der Figur 8 dargestellt sind, hergestellt. Der Eichkörper 30 weist zwei Stirnflächen 31 und 32 auf. Die Meßfläche 31 besteht hier aus dem unbeschichteten Grundstoff und die Meßfläche 32 ist mit der Chromschicht versehen. Beide Meßflächen 31 und 32 sind aber formgleich. Die Dicke der Chromschicht, die auf die Meßfläche 32 aufgebracht ist, ist bekannt. Der bei der Eichung mit diesem Eichkörper 30 ermittelte Normwert ändert sich nicht oder nur unwesentlich, auch wenn sich die elektrischen und magnetischen Eigenschaften des Grundstoffes, bedingt durch Alterungsprozesse verändern. Vorausgesetzt ist hierbei eine homogene Änderung der magnetischen und elektrischen Eigenschaften des Grundstoffs über den gesamten Eichkörper.

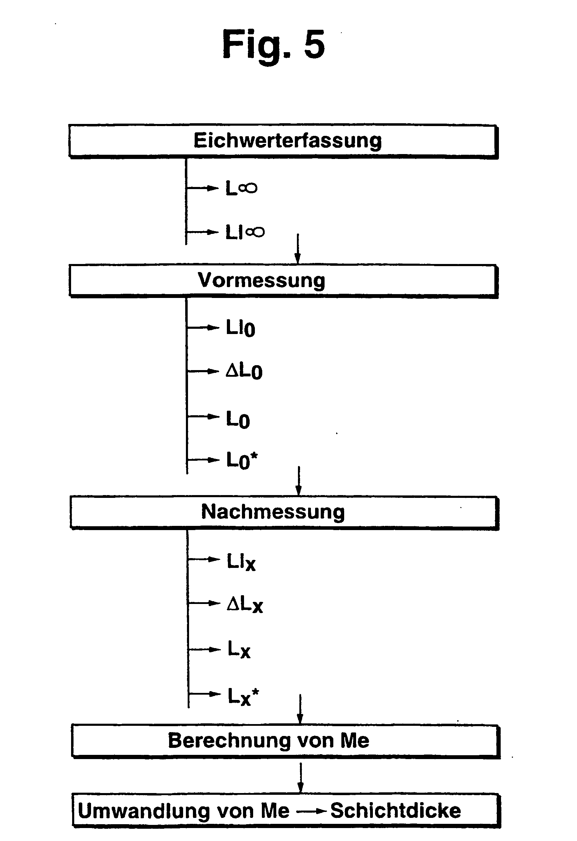

Im folgenden werden die einzelnen Meß- und Berechnungsschritte nochmals anhand des Diagramms nach Figur 5 aufgelistet. Das Meßverfahren läuft, wie erläutert grob, in drei Schritten ab, einer sogenannten Eichwerterfassung, einer sogenannten Vormessung und einer sogenannten Nachmessung. In der Eichwerterfassung wird der Induktivitätswert $L\infty$ erfaßt, der ausschließlich gegenüber dem Material (bzw. dessen Ersatzstoff) bestimmt wird, dessen Dicke ermittelt wird, wobei die Stärke des Eichkörpers vorzugsweise größer als die Eindringtiefe des magnetischen Wechselfeldes der Meßspule ist. Anschließend wird der Induktivitätswert $Ll\infty$ ermittelt, der den Induktivitätswert der Meßspule gegenüber Luft möglichst im Zeitpunkt der Erfassung des Werts $L\infty$ darstellt.

Nun beginnt der sogenannte Vormessungsabschnitt.

3. Erfassung des aktuellen Induktivitätswerts der Spule gegenüber Luft $Ll_0$
4. Differenzbildung $\Delta L_0 = Ll_0 - Ll\infty$.
5. Ermittlung des Induktivitätswertes $L_0$, d.h. des Induktivitätswerts gegenüber dem unbeschichteten Grundkörper.
6. Ermittlung des korrigierten Werts $L_0^*$ entsprechend der Differenzbildung $L_0^* = L_0 - \Delta L_0$

Nun folgen die Berechnungsschritte der sogenannten Nachmessung:

7. Ermittlung des Induktivitätswerts der Spule gegenüber Luft $Ll_X$
8. Bilde die Differenz $\Delta L_X = Ll_X - L^l\infty$
9. Ermittlung des Induktivitätswerts $L_X$
10. Ermittlung des korrigierten Wertes $L_X^*$ durch Differenzbildung: $L_X^* = L_X - \Delta L_X$
11. Durchführung der Normwertberechnung entsprechend der Gleichung mit den Werten $L\infty$, und $L_x^*$ bzw $L_0^*$
12. Umwandlung des unter 11 ermittelten Normwertes in eine Schichtdicke mit Hilfe einer Eichkurve.

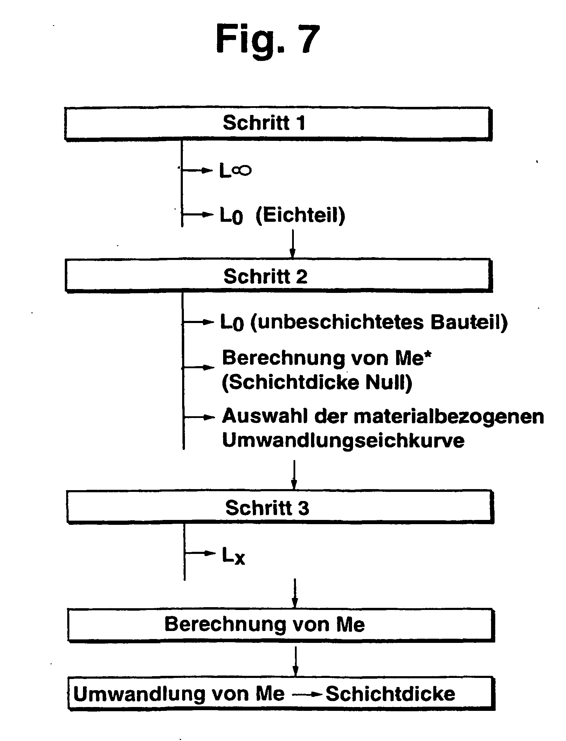

In einer Abwandlung des Verfahrens wird der Induktivitätswert $L_0$ nicht mehr bei jedem einzelnen Bauteil individuell gegenüber diesem ermittelt, sondern nun mit Hilfe eines Eichelements gemessen und abgespeichert. Dieses Justierteil darf aber seine elektrischen und magnetischen Eigenschaften während der Betriebsdauer der Anlage nicht verändern. Der Induktivitätswert $L\infty$ wird wie oben beschrieben ermittelt. Im folgenden werden nun die Meßschritte entsprechend Figur 7 dargelegt, wobei zur Vereinfachung und aus Übersichtlichkeitsgründen die Korrektur der Drift der Temperatur nicht berücksichtigt ist. Für diese Abwandlung des Verfahrens ist es erforderlich, für jedes Material eine eigene Umwandlungseichkurve entsprechend Figur 6 aufzunehmen, die mit den gleichen unter Schritt 1 verwendeten Eichelementen aufgenommen sind.

Schritt 1

1. Aufnahme des Induktivitätswerts $L\infty$ und Speicherung in Datenbank
2. Aufnahme des Induktivitätswertes $L_0$ gegenüber einem Eichelement und Speicherung in Datenbank.

Schritt 2

3. Ermittlung des Induktivitätswerts $L_0$ an einem unbeschichteten Bauteil
4. Errechnung des Normwerts Me mit Hilfe der Gleichung 1 bei Schichtdicke Null.
5. Auswahl der materialbezogenen Umwandlungseichkurve gemäß Figur 6.

Schritt 3

6. Ermittlung des Induktivitätswertes $L_X$ an einem beschichteten Bauteil
7. Berechnung des Normwertes mit Hilfe der Gleichung 1
8. Umsetzung der Normwerte in Schichtdickenwerte mit Hilfe einer ausgewählten Eichkurve.

Anzumerken ist, daß bei dem Verfahren gegenüber dem beim Stand der Technik verwendeten Wirbelstromverfahren bzw. Induktivverfahren die Meßspule von einem hochfrequenten Wechselstrom, z.B. 4 MHz durchflossen wird. Dabei ergeben sich kleinere Spuleninduktivitäten. Es ist kein Spulenkern erforderlich, so daß eine variable und preiswerte Bauweise möglich ist.

Durch Einsatz eines sogenannten Multiplexers ist es möglich, viele Meßteile in kurzer Zeit vermessen zu können. Hierbei sind viele Meßspulen gleichzeitig den zu bestimmenden Meßflächen zugeordnet. Kurzzeitig nacheinander werden von einer Meßbrücke mittels des Multiplexers diese Meßflächen abgetastet. Dies ist möglich, auch wenn mit der oben erwähnten hohen Meßfrequenz von z.B. 4 MHz die Induktivitätswerte ermittelt werden.

In der Figur 9 ist eine weitere Ausgestaltung der konstruktiven Anordnung nach Figur 1 dargestellt. Die im Verfahren beschriebene Erfassung des Induktivitätswerts $L_0$ (Messung der Spule gegenüber unbeschichtetem Bauteil) kann auch mit einer separaten zweiten Meßspule 40 erfolgen. Hierzu muß nach der Verchromung, d.h. nach Aufbringen der Schicht, deren Dicke zu messen ist, auf der Oberfläche des zu überwachenden Bauteils noch eine nicht beschichtete Zone vorhanden sein. Bei dem in der Figur 9 dargestellten Bauteil 41 ragt ein Fortsatz 44 des Spulenkörpers 42 in eine Bohrung 43 des Bauteils 41. Die Wandung der Bohrung 43 ist hierbei nicht mit der zu bestimmenden Chromschicht bedeckt. Mit Hilfe der Spule 40 kann nun die elektrische und magnetische Eigenschaft des Grundkörpers ermittelt werden, während gleichzeitig mit Hilfe der Meßspule 14 eine Messung gegenüber der zu bestimmenden Chromschicht erfolgen kann. Mit Hilfe dieses Sensors ist es möglich, daß das Bauteil nur einmal auf dem Sensor positioniert werden muß, so daß eine noch kürzere Taktzeit entsteht.

Bei dem bisher beschriebenen Meßverfahren wurde davon ausgegangen, daß die Qualität des Grundstoffes nur in sehr geringen Grenzen schwankt. Dies gilt insbesondere für die Figuren 2 und 4. Wird der Grundstoff bei einer Massenproduktion aber zum Beispiel von verschiedenen Herstellern angeliefert, so können Qualitätsunterschiede mit größeren Schwankungen auftreten. Diese Schwankungen können zum Beispiel durch unterschiedliche Glühverfahren des Grundstoffes hervorgerufen sein, was aber Veränderungen der Permeabilität des Grundstoffes bedingt. Diese größeren Schwankungen bewirken somit eine Veränderung der magnetischen und elektrischen Eigenschaften des Grundstoffes, wodurch, ohne daß unterschiedliche Schichtdicken vorliegen würden, unterschiedliche Meßsignale erzeugt würden. Mit Hilfe des anschließend beschriebenen Korrekturverfahrens wird nun dieser Einfluß von Schwankungen der stofflichen Beschaffenheit des Grundstoffs auf das Meßsignal weitgehend eliminiert. In der Figur 4 ist man bisher von nahezu zusammenfallenden Meßkurven bei relativ geringfügig unterschiedlichen Grundstoffen ausgegangen. Bedingt durch die oben erwähnte große unterschiedliche Qualität des Grundstoffes ergeben sich, in der Figur 10 dargestellt, unterschiedliche Kurven, die den Zusammenhang zwischen Me und a darstellen. Die Anfangs- und Endpunkte aller Meßkurven würden zusammenfallen. Zur Fehlereliminierung muß nun zuerst ein Kennwert K ermittelt werden, der die Qualität des Grundstoffes beschreibt und somit eine Aussage über die Qualität des Grundstoffes ermittelt. Hierzu wird von der oben beschriebenen Vormessung der Induktivitätswert $L_0$ der Sensorspule benützt. Dieser Wert $L_0$ wird anschließend mit Hilfe eines Algorithmuses in einen dimensionslosen Kennwert K umgeformt. Die Größe dieses Kennwertes K bestimmt den Wert eines daraus abgeleiteten Korrekturfaktors F, mit dem das gemessene Meßsignal der Dicke der Beschichtung korrigiert werden kann. Selbstverständlich muß für jedes einzelne Meßobjekt der Wert $L_0$ ermittelt werden. Der Kennwert K errechnet sich nun nach folgender Beziehung:

$$K = e^{*} \; \frac{L_{SA} - L_0}{L_{\infty}^{*} - L_{SA}}$$

e ist ein Zahlenfaktor (z.B. 100) um anschauliche Kenngrößenwerte zu erhalten. Er kann auch eventuell Eins sein.

Ferner ist

| | |
|---|---|
| $L_{SA}$ | der Induktivitätswert der Sensorspule gemessen gegenüber Luft |
| $L_0$ | der Induktivitätswert der Sensorpule, wobei die Spule auf der unbeschichteten Meßfläche des Grundstoffes positioniert ist |
| $L_{\infty}^{*}$ | der Induktivitätswert der Sensorspule, wobei die Spule auf einer chrombeschichteten Meßfläche positioniert ist, d. h. die Schichtdicke von zum Beispiel Chrom ist viel dicker als die Eindringtiefe des Wechselfeldes der Spule, was bedeutet, daß die Spule nur gegenüber dem Material der Schicht mißt. |

Dieser Kennwert K erfaßt, weitgehend unabhängig von der Meßempfindlichkeit der Meßspule, im weitesten Sinn die elektrischen und magnetischen Eigenschaften des Grundstoffes. Da diese Eigenschaften die Höhe des Meßsignals beeinflussen, wie der obigen Ausführung zur Ermittlung des Meßwertes zu entnehmen ist, kann der Kennwert K zur Korrektur des ermittelten Meßwertes der Schichtdicke herangezogen werden.

Dieser Kennwert K muß nun in einem Korrekturfaktor F zur Meßfehlereliminierung der für die Schichtdicke gemessenen Meßwerte umgewandelt werden. Dieser Korrekturfaktor F wird zum Beispiel mit Hilfe der in Figur 11 dargestellten Justierkennlinie ermittelt. Im Diagramm nach Figur 11 ist ein linearer Zusammenhang zwischen dem Korrekturfaktor F und dem Kennwert K, der der Gleichung

$$F_x = b^{*} \, K_x + c$$

entspricht, unterstellt. In dieser Gleichung entspricht
b der Steigung der Justierkennlinie und
c dem Anfangswert der Kurve.

Diese Justierkennlinie wird nun so ermittelt, daß Meßobjekte mit unterschiedlichen Kennwerten K gleich beschichtet werden, z.B. mit der Nennschichtdikke des zu prüfenden Teils. Diese Schichtdicke wird nun zuerst mit dem oben beschriebenen Verfahren gemessen und mit einem anderen Verfahren, z.B. im Schliffbild, verifiziert. Durch die Beziehung $F = \frac{D_M}{D_W}$ kann für die Kennwerte K der einzelnen Meßobjekte der jeweilige Korrekturfaktor F ermittelt werden.

Dabei bedeutet

| | |
|---|---|
| $D_W$ | die wirkliche Schichtdicke, wie sie z.B. im Schliffbild gemessen wird und |

$D_M$  die mit Hilfe des oben erwähnten Meßverfahrens bestimmte Schichtdicke.

Diese für verschiedene Meßobjekte ermittelten Kennwerte K und korrekturfaktoren F werden in ein Diagramm nach der Figur 11 eingetragen. Der Verlauf der sich daraus ergebenden Kurve ist auch abhängig vom Trägermaterial des Meßobjekts. Der Kurvenverlauf kann auch nahezu linear sein. In diesem Fall lassen sich die Faktoren b und c der oben genannten Gleichung $F_x$ = b ∗ $K_x$+ c ermitteln, so daß sich die Umsetzung der Kennwerte in Korrekturfaktoren einfach bewerkstelligen läßt. Falls man keine linearen Verhältnisse unterstellen kann, muß die Umsetzung der Kennwerte in Korrekturfaktoren mittels tabellarisch hinterlegter Werte erfolgen.
Die größte Korrekturgenauigkeit erhält man, wenn die oben erwähnte Nennschichtdicke auch weitgehend der Dicke der anschließend zu messenden und zu korrigierenden Schicht entspricht.
Nach Ermittlung dieser in Figur 11 dargestellten Justierkennlinie kann jedem Kennwert K ein Korrekturfaktor F zugeordnet werden. Somit kann im weiteren jeder ermittelten Schichtdicke $D_M$ mit Hilfe des Korrekturfaktors F entsprechend der Beziehung $D_W = \frac{D_M}{F}$ die reale Schichtdicke $D_W$ ermittelt werden.

**Patentansprüche**

1.  Verfahren zum Eliminieren von Meßfehlern bei der Bestimmung der Dicke einer Schicht (20) aus elektrisch leitendem Material, die auf einem Körper (17) aus ferromagnetischem Material unterschiedlicher Qualität aufgebracht ist, mit Hilfe mindestens einer von einem Wechselstrom durchflossenen Meßspule (14), deren Induktivität ausgewertet wird, wobei

    - der Induktivitätswert $L_{SA}$ der Spule gegenüber Luft gemessen wird,
    - der Induktivitätswert $L_0$ der Spule gemessen wird, wenn die Spule auf der unbeschichteten Messfläche des Materials des Körpers positioniert ist,
    - der Induktivitätswert $L_\infty$ der Spule gemessen wird, wenn die Spule auf einer beschichteten Meßfläche positioniert ist, deren Schichtdicke viel dicker ist als die Eindringtiefe des Wechselfeldes der Spule,
    - ein dimensionsloser Kennwert K, der die Qualität des Materials des Körpers beschreibt, mit Hilfe der folgenden Gleichung ermittelt wird:

$$\kappa = e * \frac{L_{SA}-L_0}{L_\infty-L_{SA}},$$

    wobei e ein Zahlenfaktor ist, der auch 1 sein kann,

    - der Kennwert K mit Hilfe einer Justierkennlinie in einen Korrekturfaktor F umgewandelt wird und
    - der gemessene Dickenwert $D_M$ in einen realen Dickenwert $D_W$ mit Hilfe der Gleichung

$$D_W = \frac{D_M}{F}$$

    umgewandelt wird.

2.  Verfahren nach Anspruch 1, **dadurch gekennzeichnet, daß** die Justierkennlinie nahezu linear verläuft.

**Claims**

1.  Method of eliminating measuring errors when determining the thickness of a layer (20) made of electrically conductive material which has been applied to a body (17) of ferromagnetic material of varying quality, with the aid of at least one measuring coil (14) through which an alternating current flows and the inductance of which is evaluated,

    - the inductance value $L_{SA}$ of the coil being measured with respect to air,
    - the inductance value $L_0$ of the coil being measured when the coil is positioned on the uncoated measuring surface of the material of the body,
    - the inductance value $L_\infty$ of the coil being measured when the coil is positioned on a coated measuring surface, the layer thickness of which is much thicker than the depth of penetration of the alternating field of the coil,
    - a dimensionless characteristic value K, which describes the quality of the material of the body, being ascertained with the aid of the following equation:

$$\kappa = e * \frac{L_{SA}-L_0}{L_\infty-L_{SA}},$$

    where e is a numerical factor, which may also be 1,
    - the characteristic value K is converted with the aid of a characteristic adjustment curve into a correction factor F and
    - the measured thickness value $D_M$ is converted into a real thickness value $D_W$ with the aid of the equation

$$D_W = \frac{D_M}{F}$$

2. Method according to Claim 1, **characterized in that** the characteristic adjustment curve has a virtually linear progression.

**Revendications**

1. Procédé pour éliminer les erreurs de mesure dans la détermination de l'épaisseur d'une couche (20) faite d'une matière conductrice de l'électricité déposée sur un corps (17) en matière ferromagnétique d'une qualité variable, à l'aide d'au moins une bobine de mesure (14) parcourue par un courant alternatif, dont l'inductance est analysée, dans lequel

   - la valeur d'inductance $L_{SA}$ de la bobine est mesurée par rapport à l'air,
   - la valeur d'inductance $L_0$ de la bobine est mesurée lorsque la bobine est positionnée sur la surface de mesure non revêtue de la matière du corps,
   - la valeur d'inductance $L_\infty$ de la bobine est mesurée lorsque la bobine est positionnée sur une surface de mesure revêtue dont l'épaisseur de couche est beaucoup plus épaisse que la profondeur de pénétration du champ alternatif de la bobine,
   - un coefficient sans dimension K qui décrit la qualité de la matière du corps est obtenue à l'aide de l'équation suivante :

$$K = e \,^* \, \frac{L_{SA} - L_0}{L_\infty - L_{SA}}$$

   où e est un facteur numérique qui peut aussi être 1,
   - le coefficient K est converti en un facteur de correction F à l'aide d'une caractéristique d'ajustement, et
   - la valeur d'épaisseur mesurée $D_M$ est convertie en une valeur d'épaisseur réelle Dw à l'aide de l'équation :

$$D_W = \frac{D_M}{F}$$

2. Procédé selon la revendication 1, **caractérisé par** la caractéristique d'ajustement a une allure presque linéaire.

# Fig. 1

# Fig. 2

# Fig. 3

$\alpha_1 < \alpha_2 < \alpha_3 < \alpha_4$

$\beta_1 < \beta_2 < \beta_3 < \beta_4$

# Fig. 4

# Fig. 6

# Fig. 5

| Eichwerterfassung |
|---|

$\longmapsto$ $L\infty$

$\longmapsto$ $LI\infty$

| Vormessung |
|---|

$\longmapsto$ $LI_0$

$\longmapsto$ $\Delta L_0$

$\longmapsto$ $L_0$

$\longmapsto$ $L_0^*$

| Nachmessung |
|---|

$\longmapsto$ $LI_x$

$\longmapsto$ $\Delta L_x$

$\longmapsto$ $L_x$

$\longmapsto$ $L_x^*$

| Berechnung von Me |
|---|

| Umwandlung von Me $\longrightarrow$ Schichtdicke |
|---|

# Fig. 7

| Schritt 1 |
|---|

$\rightarrow$ L$\infty$

$\rightarrow$ L$_0$ (Eichteil)

| Schritt 2 |
|---|

$\rightarrow$ L$_0$ (unbeschichtetes Bauteil)

$\rightarrow$ Berechnung von Me* (Schichtdicke Null)

$\rightarrow$ Auswahl der materialbezogenen Umwandlungseichkurve

| Schritt 3 |
|---|

$\rightarrow$ L$_x$

| Berechnung von Me |
|---|

| Umwandlung von Me $\longrightarrow$ Schichtdicke |
|---|

# Fig. 8

# Fig. 9

# Fig. 10

# Fig. 11